# EUROPEAN PATENT APPLICATION

(11) **EP 2 806 332 A2**
(43) Date of publication of application: **26.11.2014**
(21) Application number: 14168530.5
(22) Date of filing: 15.05.2014
(51) Int. Cl.: G06F 1/16, G06F 3/039

(54) **Method for controlling state change and executing function and electronic device supporting the same**

(30) Priority: 22.05.2013 KR 20130057484
(71) Applicant: Samsung Electronics Co., Ltd, Gyeonggi-do 443-742 (KR)
(72) Inventor: Hong, Hyunju, 443-742 Gyeonggi-do (KR); Cha, Dohun, 443-742 Gyeonggi-do (KR)
(74) Representative: Birchenough, Lewis

(57) **Abstract**

A method and electronic device for controlling a state of the electronic device is disclosed. The electronic device includes a touch panel, a front cover configured to cover the touch panel in a closed state, and expose the touch panel in an open state, and a control unit. An electronic device state is detected, including at least a sleep mode and an active mode, and a front cover state is detected, including at least the closed state and the open state. The electronic device state is maintained according to a first combination of the electronic device state and the front cover state. The electronic device state is altered according to a second combination of the electronic device state and the front cover state.

## Description

### TECHNICAL FIELD

The present disclosure relates to controlling states and executing functions of an electronic device, and more particularly, to controlling states a and executing functions according to a front cover mounted on the electronic device.

### BACKGROUND

Recently, electronic devices have been widely used based on their mobility. Particularly, mobile communication terminals, which can perform voice calls while they are on the move are so popular that a large majority of the people use them. A mobile communication terminal may transmitting/receiving call information between a caller and a callee. Such a terminal may also have a variety of other functions, such as an media player function, and media capture via a digital camera. These terminals may also support execution of mobile games or arcade games, and the like.

When an input signal is not generated by a user for a predetermined time period or longer, the conventional portable terminal may enter an altered state for the to reduce power consumption. For example, the conventional portable terminal may turn off a display unit. Through this function support, the terminal may optimize power consumption during periods the user is not utilizing the terminal.

Users frequently use front covers integrated with battery covers to protect the touch panels of their portable terminals. If the user wishes to execute a function of the portable terminal, the user may open the front cover from the touch panel, press a home key, cancel a lock screen, and the like.

When the user does not use the portable terminal during a predetermined time period or longer, the terminal may enter a sleep mode. However, if the function is not properly set, or if an error occur while executing the function, the display unit of the portable terminal may remain on, causing increased unnecessary power consumption.

### SUMMARY

An embodiment of the present disclosure provides a method for controlling a state change, which allows the detection of a position and an operating state of a front cover mounted on an electronic device and provides support so as to enable the electronic device to rapidly change a state thereof, and the electronic device supporting the same.

Also, another embodiment of the present disclosure provides a method for executing a function, which provides support so as to enable a user to rapidly perform a relevant function in response to an incoming signal in a state where a front cover mounted on an electronic device covers a touch panel, and the electronic device supporting the same.

In one aspect of the present disclosure, a method of controlling a state of an electronic device is disclosed, including detecting whether a front cover is coupled to the electronic device, in response to detecting the front cover is coupled, detecting: an electronic device state, including at least a sleep mode and an active mode, and a front cover state, including at least a closed state where the front cover covers a touch panel of the electronic device, and an open state where the front cover exposes the touch panel, maintaining the electronic device state according to a first combination of the electronic device state and the front cover state, and altering the electronic device state according to a second combination of the electronic device state and the front cover state.

In one aspect of the present disclosure, a method of controlling a state of an electronic device equipped with a front cover is disclosed, the front cover having a particular area, the particular area transparent to allow viewing of a touch panel when the front cover covers the touch panel. The method includes detecting: an electronic device state, including at least a sleep mode and an active mode, and a front cover state, including at least a closed state where the front cover covers a touch panel of the electronic device, and an open state where the front cover exposes the touch panel, and in response to detecting the front cover state is the closed state and the electronic device state is the sleep mode: adjusting a touch sensitivity of the touch panel for the particular area, and detecting a touch input event generated by a a touch event on the touch panel, or a hovering event proximate to the touch panel within the particular area.

In one aspect of the present disclosure, an electronic device is disclosed, including: a touch panel, a front cover configured to cover the touch panel in a closed state, and expose the touch panel in an open state, and a control unit configured to: detect an electronic device state, including at least a sleep mode and an active mode, and a front cover state, including at least the closed state and the open state, maintain the electronic device state according to a first combination of the electronic device state and the front cover state, and alter the electronic device state according to a second combination of the electronic device state and the front cover state.

### BRIEF DESCRIPTION OF THE DRAWINGS

The present disclosure will be more apparent from the following detailed description in conjunction with the accompanying drawings, in which:
FIG. 1 is a block diagram illustrating an example configuration of an electronic device supporting a automatic state change and function excution, according to an embodiment of the present disclosure;
FIG. 2 illustrates an example front surface of an electronic device in which the front cover is open, according to an embodiment of the present disclosure;
FIG. 3 illustrates an example rear surface of an electronic device according to an embodiment of the present disclosure;
FIG. 4 illustrates a cross section of an example front cover and that of an electronic device, according to an embodiment of the present disclosure;
FIG. 5 illustrates a cross section of an example front cover and that of an electronic device, according to an embodiment of the present disclosure;
FIG. 6 illustrates an example front cover including a transparent area according to an embodiment of the present disclosure;
FIG. 7 illustrates an example front cover including a transparent area according to an embodiment of the present disclosure; and
FIG. 8 illustrates an example method for controlling a state change in an electronic device having a front cover, according to an embodiment of the present disclosure;
FIG. 9 illustrates an example method for controlling a state change in an electronic device having a front cover, according to an embodiment of the present disclosure;
FIG. 10 is a flowchart illustrating an example method for executing a function in an electronic device having a front cover according to an embodiment of the present disclosure.

### DETAILED DESCRIPTION

Hereinafter, embodiments of the present disclosure will be described in detail with reference to the accompanying drawings.

In describing embodiments of the present disclosure, a description will be omitted of the technical contents which are well known in the technical field, to which the present disclosure pertains, and are not directly related to the present disclosure. Also, a detailed description will be omitted of elements which are substantially identical in configuration and function.

Similarly, in the accompanying drawings, some elements are exaggerated, omitted, or schematically illustrated, and the size of each element does not entirely reflect an actual size. Accordingly, the inventive concept is not limited to relative sizes or distances drawn in the accompanying drawings.

Prior to a detailed description of the present disclosure, terms and words used in the specification and claims should not be construed as having common and dictionary meanings, but should be construed as having meanings and concepts corresponding to the technical idea of the present disclosure. Embodiments described in the specification and illustrated in the accompanying drawings are simply example embodiments of the present disclosure, and do not completely encompass the technical idea of the present disclosure. Therefore, it should be understood that various equivalents and modifications which may replace the disclosed embodiments could be made thereto at the time of filing the present application.

It is obvious that an electronic device according to the present disclosure may be applied to all information communication devices and multimedia devices, such as a Moving Picture Experts Group Audio Layer-3 (mp3) player, a Portable Multimedia Player (PMP), a Personal Digital Assistant (PDA), a tablet Personal Computer (PC), a mobile phone, a smart phone, etc. and may be applied to the applications of them. Hereinafter, a case will be described in which an electronic device according to the present disclosure corresponds to a smart phone.

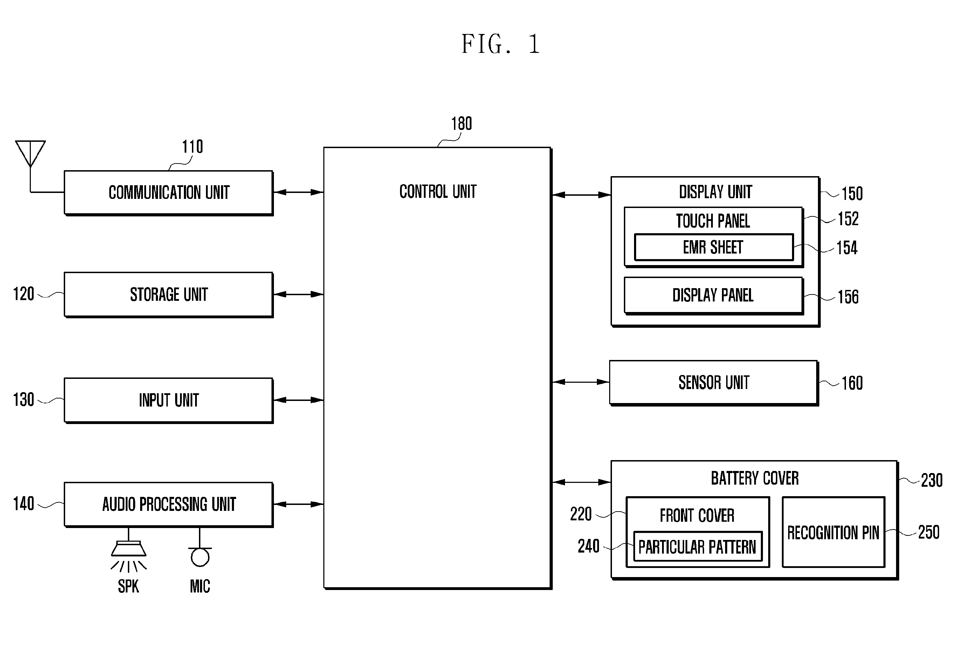

FIG. 1 is a block diagram illustrating an example configuration of an electronic device supporting a automatic state change and function excution, according to an embodiment of the present disclosure. The example electronic device includes a communication unit 110, a storage unit 120, an input unit 130, an audio processing unit 140, a display unit 150, a sensor unit 160, a battery cover unit 170, and a control unit 180.

The communication unit 110 may include one or more modules which enable wireless communication between the electronic device and a wireless communication system or between the electronic device and another user device. For example, the wireless communication unit 110 may include a mobile communication module, a Wireless Local Area Network (WLAN) module, a short-range communication module, a location calculation module, and a broadcast receiving module.

The mobile communication module transmits and receives wireless signals to/from at least one of a base station, an external terminal or a server, via a mobile communication network. Examples of the wireless signal may include a voice call signal, video call signal, and data in various forms according to the transmission and reception of text/multimedia messages.

According to the control of the control unit 180, the mobile communication module may connect to a provider server, a content server, or the like, and may download contents, such as an image file, a moving image file, a sound source file and the like, in a file form.

The WLAN module enables the electronic device to connect to a wireless Internet, and forms a WLAN link between the electronic device and another user device. The WLAN module may be mounted inside or outside the electronic device. Use may be made of Wireless Internet technologies, such as Wireless Fidelity (Wi-Fi), Wireless broadband (Wibro), World Interoperability for Microwave Access (Wimax), High Speed Downlink Packet Access (HSDPA), and the like.

The short-range communication module is used for short-range communication. Use may be made of short range communication technologies, such as Bluetooth, Radio Frequency Identification (RFID), Infrared Data Association (IrDA), Ultra Wideband (UWB), ZigBee, Near Field Communication (NFC), and the like. Also, the short-range communication module may transmit or receive content, which includes metadata, and the like to or from another electronic device when the electronic device is connected to another electronic device through short-range communication.

The storage unit 120 may store programs for processing and control performed by the control unit 180, or may temporarily store input/output data. Under the control of the control unit 180, the storage unit 120 may store data generated by the electronic device or data received from an external device (e.g., a server, a desktop Personal Computer (PC), a smart phone, etc.) through the communication unit 110 or an external device interface unit.

The storage unit 120 may store together the frequency of use, the level of importance, and priority according to the operation of a function of the electronic device. The storage unit 120 may store data on vibrations and sounds of various patterns, which are output in response to a touch input on a touch screen.

The storage unit 120 stores a booting program and an Operating System (OS) for operating the electronic device. The storage unit 120 stores an embedded application and a third party application. The term "embedded application" refers to an application basically installed in the electronic device. For example, the embedded application may be a browser, an e-mail, an instant messenger, and the like. The term "third party application" refers to an application which may be downloaded from an online market and installed in the electronic device, and there are various types of third party applications. The third party application is freely installed and controlled. When the electronic device is turned on, the booting program is first loaded into a main memory (e.g., a Random Access Memory (RAM)) of the control unit 180. The booting program loads the OS into the main memory so as to enable the electronic device to operate. Also, the OS loads applications into the main memory, and executes the loaded applications. The relevant booting and loading are a widely-known technology in a computer system, and thus a detailed description thereof will be omitted.

The storage unit 120 may include a storage medium of at least one type from among a flash memory type, a hard disk type, a multimedia card micro type, a memory card type (e.g., a Secure Digital (SD) or eXtreme Digital (XD) memory card), a Random Access Memory (RAM), a Static RAM (SRAM), a Read Only Memory (ROM), a Programmable ROM (PROM), an Electrically Erasable PROM (EEPROM), a Magnetic RAM (MRAM), a magnetic disk, an optical disk, and the like. The electronic device may also operate in relation to a web storage which performs a storage function of the storage unit 120 on the Internet.

The input unit 130 generates input data that a user inputs in order to control an operation of the electronic device. The input unit 130 may include a keypad, a dome switch, a touch pad (static pressure/capacitance), a jog wheel, a jog switch, and the like. The input unit 130 may be implemented in the form of buttons on an outer surface of the electronic device, and some buttons may be implemented by using a touch panel.

For example, the user input unit 130 may receive an input corresponding to a touch event or hovering generated through a transparent area formed at a part of the front cover even in a state where the front cover mounted on the electronic device covers a touch panel of the electronic device.

The audio processing unit 140 provides an audio signal, which has been received from the control unit 180, to a speaker (SPK), and provides an audio signal such as a voice and the like, which has been received from a microphone (MIC), to the control unit 180. According to the control of the control unit 180, the audio processing unit 140 converts sound data, such as voice/sound, into an audible sound and outputs the audible sound, through the SPK. According to the control of the control unit 180, the audio processing unit 140 converts an audio signal such as a voice and the like, which has been received from the MIC, into a digital signal, and provides the digital signal to the control unit 180.

The SPK may output audio data received from the communication unit 110, audio data received as input from the from the MIC, or audio data stored in the storage unit 120, in a call mode, a recording mode, a voice recognition mode, a broadcast receiving mode, an image capturing mode, a situation recognition service execution mode, and the like. The SPK may output sound signals related to functions (e.g., the feedback of situation information according to the execution of an action, the reception of a call connection, the transmission of a call connection, image capturing, the reproduction of media content such as a music file and a moving image file, etc.) performed by the electronic device.

The MIC receives, as input, a sound signal from the outside in the call mode, the recording mode, the voice recognition mode, the image capturing mode, a voice recognition-based dictation execution mode and the like, and processes the received sound signal into electrical voice data. In the call mode, the processed voice data may be converted into a form transmissible to a mobile communication base station through the mobile communication module, and the voice data in the form transmissible to the mobile communication base station may be output. Various noise removal algorithms may be implemented in the MIC in order to remove noise generated in process of receiving the external sound signal as input.

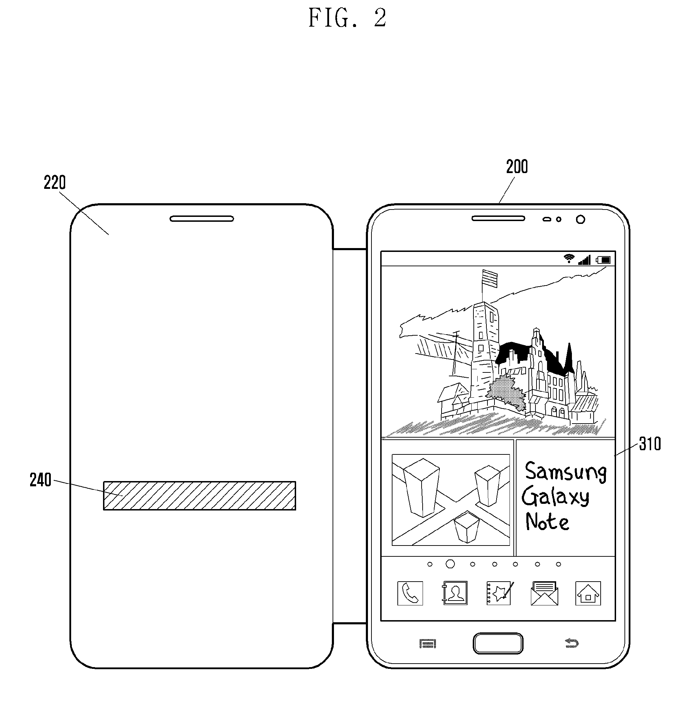

The display unit 150 displays a screen according to the execution of a user function, and senses an input event related to the control of the user function. The display unit 150 may include a touch panel 152 and a display panel 156. Also, the touch panel 152 which is a pen recognition panel for operating a touch panel pen function may include an Electromagnetic Resonance (EMR) sheet 154. In this case, the electronic device may be implemented so as to include a touch pen and a particular pattern included in a front cover (as shown below in FIG. 2)

FIG. 2 illustrates an example front surface of an electronic device in which the front cover is open, according to an embodiment of the present disclosure. Particularly, the EMR sheet 154 senses the particular pattern 240 included in the front cover 220, and thereby determines whether the front cover 220 touches the touch panel 152, whether the front cover 220 is located at a position near the touch panel 152, or whether the front cover 220 is located at a position spaced by a predetermined distance or longer from the touch panel 152.

Referring again to FIG. 1, the touch panel 152 is placed on the display unit 150. Specifically, the touch panel 152 may be implemented as an add-on type touch panel disposed on a front surface of the display unit 150, an on-cell type touch panel inserted into the display unit 150, or an in-cell type touch panel. The size of a touch screen may be determined according to the size of the touch panel. Examples of the touch panel 152 may include a resistive-type touch panel, a capacitive-type touch panel, an electromagnetic induction-type touch panel, and the like.

In an embodiment of the present disclosure, when the touch panel 152 is implemented as the capacitive-type touch panel, the touch panel 152 supports the generation of an input event by touch input tools, such as a finger of the user capable of producing a change in capacitance, the particular pattern included in the front cover, and the like.

Alternatively, when the touch panel 152 includes the EMR sheet 154 implemented in an electromagnetic induction scheme, the EMR sheet 154 may support the generation of an input event by input tools, such as a touch pen capable of producing an electromagnetic induction change, the particular pattern 240 included in the front cover, and the like. The EMR sheet 154 supports electromagnetic induction generated by a coil provided to the touch pen and the like, provides the control unit 180 with the value of a position where the electromagnetic induction has been generated, and thereby provides support so as to detect the particular pattern 240 included in the front cover 220. In this case, the EMR sheet 154 may provide support so as to enable discrimination between hovering states by using the value of electromagnetic induction which depends on a distance between the screen of the display unit 150 and the touch pen.

Under the control of the control unit 180, the display unit 150 converts image data, which has been received as input from the control unit 180, into an analog signal, and displays the converted analog signal. The display unit 150 may provide a screen according to the operation of the electronic device and a screen according to the execution of a user function, for example, a lock screen, a home screen, an application (hereinafter referred to as "App") execution screen, a menu screen, a keypad screen, a message writing screen, an Internet screen, and the like.

According to an embodiment of the present disclosure, when the display unit 150 receives an incoming signal/a notification signal in a state where the front cover 220 covers the touch panel 152, the touch sensitivity of a particular area of the display unit 150, which is preset by the control unit 180, increases and the display unit 150 displays an item matched to the received incoming signal/notification signal in the particular area (hereinafter, the particular area may be referred to as a "transparent area"). The display unit 150 provides the control unit 180 with a result of sensing hovering or a touch event generated in the transparent area having the increased touch sensitivity. Accordingly, at least one item exposed in the transparent area is selected, and a function matched to the selected item is performed.

The sensor unit 160 may include an image sensor, a motion sensor, a temperature sensor, a proximity sensor, an environmental sensor and the like, and particularly, may include any sensors capable of detecting a position or an operation of the front cover mounted on the electronic device.

The control unit 180 controls an overall operation of the electronic device and a signal flow between the internal elements of the electronic device, processes data, and controls the supply of power from a battery to the elements of the electronic device. The control unit 180 may include a main memory which stores an application program and the OS, a cache memory which temporarily stores data to be written to the storage unit 120 and temporarily stores data read from the storage unit 120, a Central Processing Unit (CPU), a Graphic Processing Unit (GPU), and the like. Here, the OS manages computer resources, such as the CPU, the GPU, the main memory, the auxiliary memory and the like, while serving as an interface between hardware and a program.

Specifically, the OS operates the electronic device, determines the order of tasks, and controls an arithmetic operation of the CPU and that of the GPU. Also, the OS performs a function of controlling the execution of an application program, a function of managing the storage of data and files, and the like.

Meanwhile, as is well known, the CPU is a core control unit of a computer system which performs calculations and comparisons of data, the interpretation and execution of instructions, and the like. In place of the CPU, the GPU is a graphic control unit which performs calculations and comparisons of graphic-related data, and the interpretation and execution of instructions, and the like. In each of the CPU and the GPU, two or more independent cores (e.g., a quad-core) may be integrated into one package composed of a single Integrated Circuit (IC). Alternatively, the CPU and the GPU may be integrated into one integrated chip (System on Chip (SoC)). Alternatively, the CPU and the GPU may be packaged in a multi layer. Meanwhile, a configuration including the CPU and the GPU may be referred to as an "Application Processor (AP)."

Particularly, according to an embodiment of the present disclosure, the control unit 180 has a configuration for controlling various signal flows, the collection and output of information, and the like, in order to support an automatic state change and the function execution of the electronic device having the front cover 220.

Referring againt to FIG. 2, in order to automatically change a state of the electronic device 200 having the front cover 220, when the front cover 220 is mounted on the electronic device 200, the control unit 180 first detects a present mode state of the electronic device 200. When the present mode state corresponds to an active mode, the control unit 180 detects a present state of the front cover 220, which may include a closed state covering the touch panel 310, or an opened state so as to expose the touch panel 310.

When a closed state is detected, the electronic device 200 may execute a sleep mode. In contrast, when a opened state is detected, the electronic device 200 may maintain an active mode.

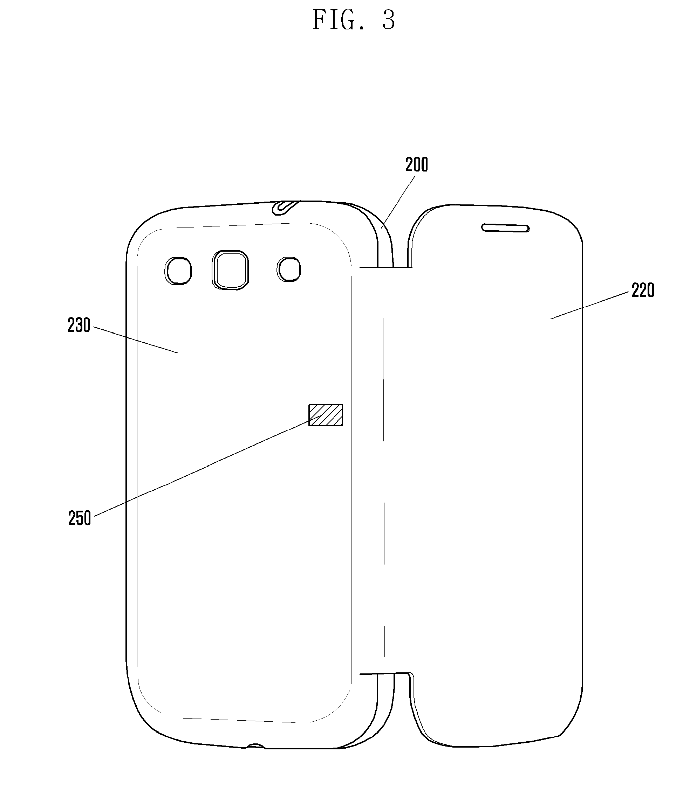

FIG. 3 illustrates an example rear surface of an electronic device according to an embodiment of the present disclosure. In order to determine whether the front cover 220 is mounted on the electronic device 200, the control unit 180 may use a recognition pin 250 included in a battery cover 230 formed as one body with the front cover 220. The recognition pin 250 may be mounted on an inner surface or an outer surface of the battery cover 230, and a main circuit board within the electronic device 200 may detect whether the recognition pin 250 exists. In one alternative configuration, the recognition pin 250 is mounted on the inner surface of the battery cover 230, the recognition pin 250 touch a physical pin included in a rear cover to indiciate that the front cover 220 is mounted on the electronic device 200. A shape and an operation of the recognition pin 250 for detecting whether the front cover 220 is mounted on the electronic device 200 are not limited thereto. Accordingly, other methods capable of detecting the front cover 220 may also be adopted.

Also, in order to detect a state in which the front cover 220 covers the touch panel 310 or a state in which the front cover 220 is opened so as to expose the touch panel 310, the control unit 180 may use the particular pattern 240 included in the front cover 220, as illustrated in FIG. 2. The particular pattern 240 may be sensed by using the EMR sheet 154 within the electronic device 200.

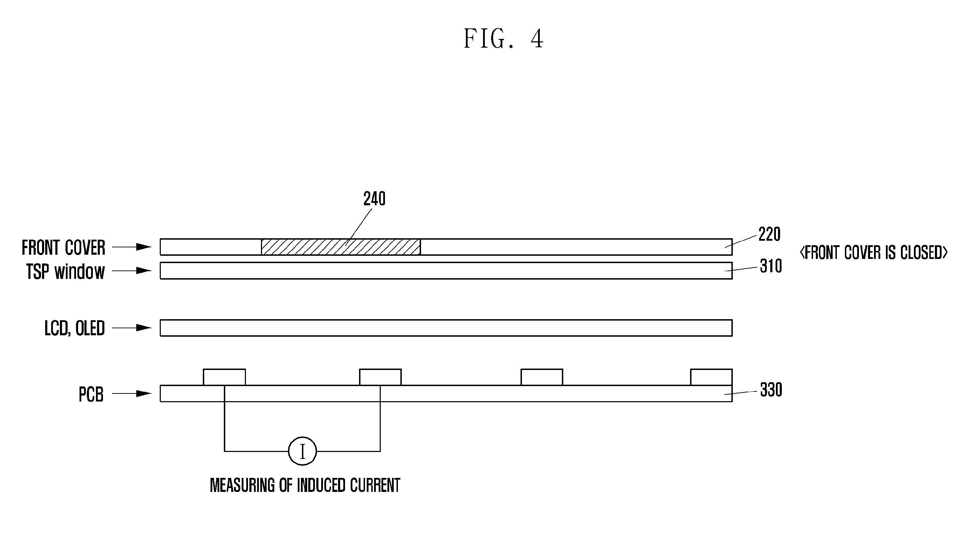

FIG. 4 illustrates a cross section of an example front cover and that of an electronic device, according to an embodiment of the present disclosure. When the particular pattern 240 contacts or approaches the touch panel 310 in the closed state where the front cover 220 covers the touch panel 310, as illustrated in FIG. 4, resonance is generated in a Printed Circuit Board (PCB) of the EMR sheet 330 through which a current flows. At this time, the generation of resonance blocks the current which flows through the PCB. Then, whether the particular pattern 240 contacts or approaches the touch panel 310 may be detected by measuring an induced current generated in the PCB due to the resonance. Next, the control unit 180 performs scanning at each position of the EMR sheet 330, and thereby may determine not only whether the particular pattern 240 contacts the touch panel 310, but also the position of the particular pattern 240, based on a difference in strength between input signals.

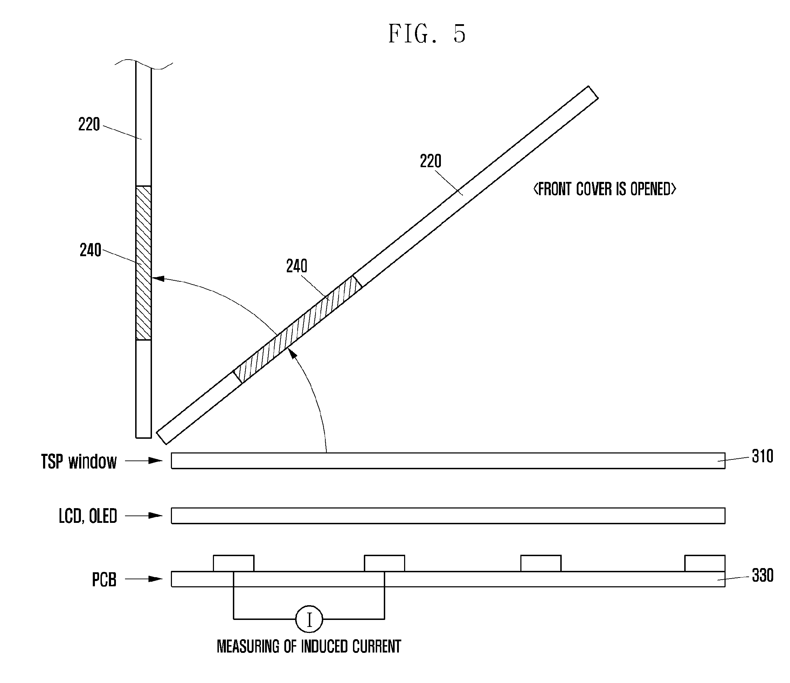

FIG. 5 illustrates a cross section of an example front cover and that of an electronic device, according to an embodiment of the present disclosure. As illustrated in FIG. 5, the front cover 220 may be opened to expose the touch panel 310. Because the particular pattern 240 does not contact or approach the touch panel 310 but is now more distant from the touch panel 310, an induced current is not generated in the EMR sheet 330. Accordingly, the control unit 180 may detect a state in which the front cover 220 is spaced by a predetermined distance or longer from the touch panel 310. The control unit 180 may determine a present state as a state in which the front cover 220 does not cover the touch panel 310 but is opened so as to expose the touch panel 310.

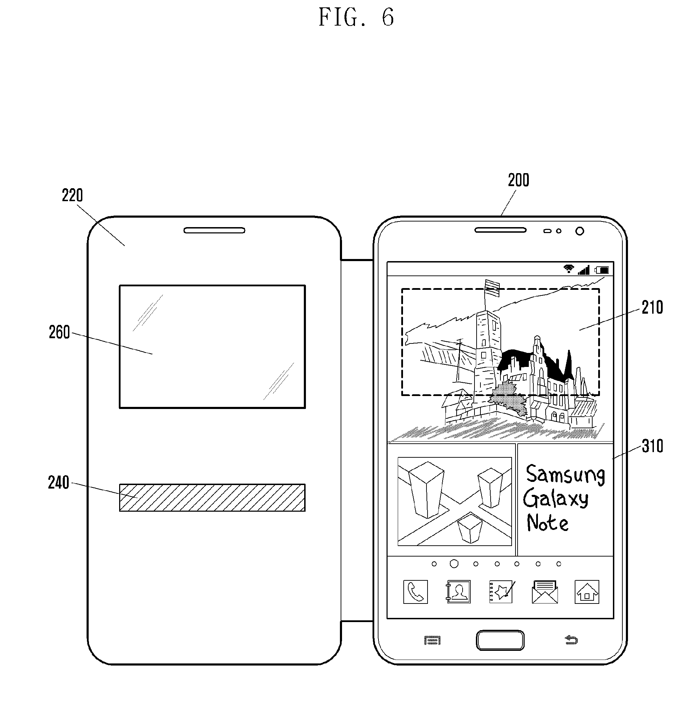

FIG. 6 illustrates an example front cover including a transparent area according to an embodiment of the present disclosure. In order to allow a part of the touch panel 310 to be exposed to the user even when the touch panel 310 is covered, the front cover 220 may including a transparent area 260, through which the part of the touch panel 310 can be seen.

In order to perform a particular function even in the closed state, the front cover 220 may includes the transparent area 260 at a part thereof partially exposed the touch panel 310. When first receiving an incoming signal or a notification signal, the control unit 180 identifies a present mode state of the electronic device 200. When the present mode state is a sleep state, the control unit 180 determines whether the front cover 220 is closed and covering the touch panel 310, or the front cover 220 is open and exposing the touch panel 310. When a closed state is detected, the control unit 180 increases a touch sensitivity of the particular area 210 of the touch panel 310, which is displayed through the transparent area 260, as to be higher than that of areas outside the particular area 210. When a user command (i.e., a touch event or hovering) input occurs in the particular area 210, the control unit 180 executes a corresponding function according to the user command.

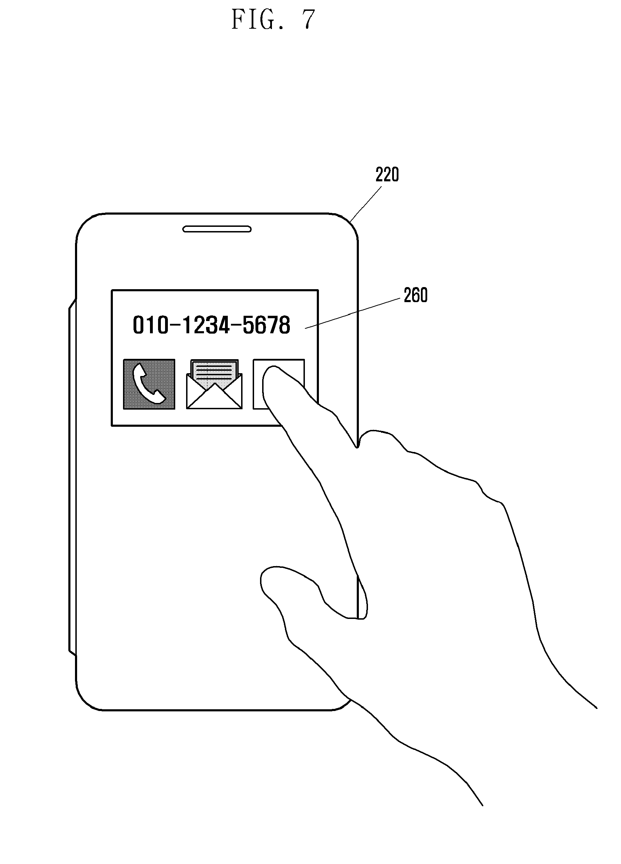

FIG. 7 illustrates an example front cover including a transparent area according to an embodiment of the present disclosure. For example, when an incoming call is signaled by a incoming bell signal ring tone, when the electronic device 200 is in a sleep state, and a hovering input is detected over a call pick-up icon displayed within the particular area 210, visible through the closed front cover 220 within the transparent area 260, a call function may be immediately executed.

The control unit 180 as described above is separated from an Application Processor (AP) which is not a large-scale processor, and is implemented as a Micro Controller Unit (MCU) which manages various sensors or an EMR sheet. Accordingly, in an embodiment of the present disclosure, even when the EMR sheet 330 and a proximity sensor are turned on, the control unit 180 can be driven with low power. As a result, the EMR sheet 330 and the proximity sensor may directly transmit a particular signal and the like, and the MCU may be driven separately from the AP.

A detailed method for automatically changing a state and executing a function by the control unit 180 in the electronic device 200 having the front cover 220 will be described below with additional reference to FIGS. 2 to 10.

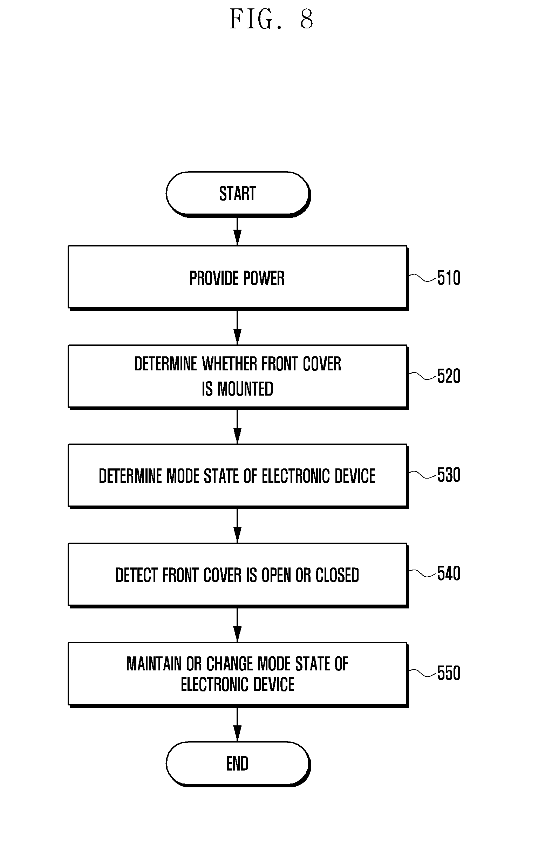

FIG. 8 illustrates an example method for controlling a state change in an electronic device having a front cover, according to an embodiment of the present disclosure. First, the control unit 180 provides power to the electronic device 200 in step 510. The electronic device 200 is turned on by receiving the supply of power, and the control unit 180 outputs at least one of a standby screen, a lock screen or an App execution screen, to the display unit 150. Also, when a predetermined time period elapses in a state where the screen is turned on, the electronic device 200 is changed to a sleep mode in which the screen is automatically turned off.

Then, the control unit 180 determines whether the front cover 220 is mounted on the electronic device 200, in step 520.

Here, the front cover 220 may be used to cover the touch panel 310 when the user is not operating the electronic device 200, is carrying the electronic device 200, or storing the electronic device 200. When the user desire to operate the electronic device 200, the front cover 220 may be opened by spacing it away from the touch panel 310 to expose the touch panel 310. As described above, the front cover 220 may include the particular pattern 240 mounted within an inside face of the front cover 220, Alternatively, the particular pattern 240 may be mounted on an outer surface, or is mounted on another part of the inner surface.

Whether the particular pattern 240 is in close contact with the touch panel 310 may be detected via the EMR sheet 330 mounted within the electronic device 200. Specifically, the particular pattern 240 may be include a conductive material which generates an electromagnetic field in the EMR sheet 330, and the form, shape and size of the particular pattern 240 may be variously implemented.

As described above, the front cover 220 may be a cover formed in one body with the battery cover 230 for covering the battery of the electronic device 200. In the present example, the battery cover 230 may include the recognition pin 250 in order to notify of whether the front cover 220 is mounted on the electronic device 200. For example, when sensing the recognition pin 250 included in the battery cover 230, the control unit 180 may determine that the front cover 220 is mounted on the electronic device 200. In contrast, when the recognition pin 250 included in the battery cover 230 is not sensed, the control unit 180 may determine that the front cover 220 is not mounted on the electronic device 200.

In step 530, the mode state of the electronic device may be determined.

In step 540, the control unit 180 detects whether the front cover 220 is closed and covering the touch panel 310, or open and thus exposing the touch panel 310.

In step 550, depending on the state of the front cover 220 the control unit 180 may either maintain the current mode state of the electronic device 200, as detected in step 530, or change the mode state to another mode state.

For example, when the front cover 220 is closed as to cover the touch panel 310, when the electronic device 200 is in an active mode, the control unit 180 may execute a sleep mode. When the front cover 220 is open and exposing the touch panel 310, and the electronic device 200 is in an active mode, the control unit 180 may maintain the active mode state. When the front cover 220 is opened to to expose the touch panel 310 when the electronic device 200 is in the sleep mode, the control unit 180 may execute the active mode. When the front cover 220 is closed to cover the touch panel 310 when the electronic device 200 is in a sleep mode, the control unit 180 may maintais the execution of the sleep mode state.

The method for controlling a state change in the electronic device 200 having the front cover 220, according to an embodiment of the present disclosure, has been briefly described. Hereinafter, a more detailed description will be made of a method for controlling a state change in the electronic device 200 by using the EMR sheet 330, which senses the front cover 220, and the proximity sensor which senses an action of opening the front cover 220.

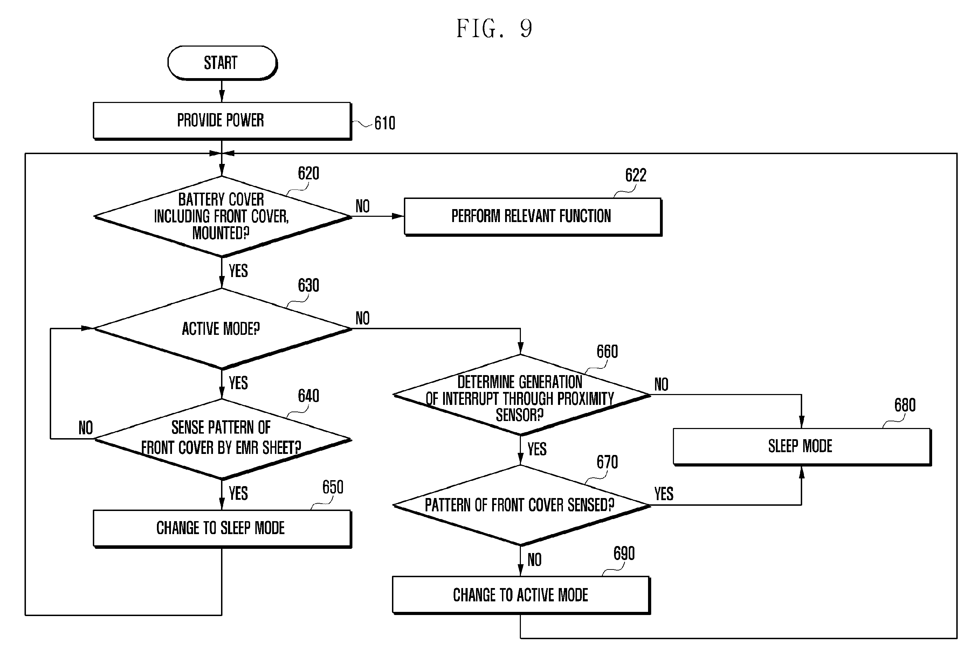

FIG. 9 illustrates an example method for controlling a state change in an electronic device having a front cover, according to an embodiment of the present disclosure. The control unit 180 supports power distribution for each element of the electronic device 200 by using power supplied from a power supply unit in step 610.

In step 620, the control unit 180 determines whether the battery cover 230 including the front cover 220 is mounted on the electronic device 200.

In other words, the control unit 180 determines whether the battery cover 230 formed in one body with the front cover 220 (which exposes or covers the touch panel 310 of the electronic device 200) is mounted on the electronic device 200. Specifically, when the control unit 180 detects the recognition pin 250 which is mounted within the battery cover 230, is mounted on the outer surface thereof, or is mounted on the inner surface thereof, the control unit 180 determines that the battery cover 230 is mounted on the electronic device 200. In contrast, when the recognition pin 250 is not detected through the main circuit board, the control unit 180 determines that the battery cover 230 is not mounted on the electronic device 200, and the electronic device 200 may perform some other relevant function in step 622.

After determining in step 620 that the battery cover 230 is mounted on the electronic device 200, the control unit 180 determines whether the electronic device 200 is in an active mode state, in step 630.

If it is determined in step 630 that the electronic device 200 is in the active mode state, the control unit 180 senses whether the pattern 240 of the front cover 220 is detected, in step 640. Through sensing the pattern 240 of the front cover 220, the control unit 180 may identify a state of the front cover 220. The front cover 220 may be closed and covering the touch panel 310 of the electronic device 200, or open and thus exposing the touch panel 310 of the electronic device 200.

The control unit 180 may thus determine whether the particular pattern 240 included in the front cover 220 is sensed by the EMR sheet 330 mounted within the electronic device 200.

To elaborate, when the front cover 220 is closed, the particular pattern 240 contacts or approaches the touch panel 310 (as illustrated in FIG. 4). Resonance is generated in the PCB of the EMR sheet 330 through which a current flows. At this time, the generation of resonance blocks the current which flows through the PCB. Then, whether the particular pattern 240 contacts or approaches the touch panel 310 may be detected by measuring an induced current generated in the PCB due to the resonance. Next, the control unit 180 performs scanning at each position of the EMR sheet 330, and may determine whether the particular pattern 240 contacts the touch panel 310 and the position of the particular pattern 240, based on a difference in strength between input signals.

In contrast, when athe front cover 220 is opened, exposing the touch panel 310 (as illustrated in FIG. 5), because the particular pattern 240 does not contact or approach the touch panel 310, but is more spaced from the touch panel 310, an induced current is not generated in the EMR sheet 330. Accordingly, the control unit 180 may detect a state in which the front cover 220 is spaced apart from the touch panel 310 by a predetermined distance. As a result, the control unit 180 may determine a present state as a state in which the front cover 220 is open and not covering the touch panel 310.

When the particular pattern 240 of the front cover 220 has been detected in step 640, the control unit 180 changes a mode state of the electronic device 200 to a sleep mode in step 650. Specifically, when the particular pattern 240 of the front cover 220 has been detected, the control unit 180 determines via detection of the particular pattern 240 that the front cover 220 is covering the touch panel 310, and may thus change the electronic device 200 to the sleep mode.

For example, in changing the electronic device 200 to sleep mode, the control unit 180 may cause the display unit 150 to be displayed at a minimum brightness. Also, to this end, the control unit 180 may perform a control operation for adjusting power supplied to the display unit 150, changing the brightness of the display unit 150 to a dimmed state. In the present example, the control unit 180 may perform a control operation for changing a state of a user function, which is presently being activated, together with adjusting the supply of power. For example, the control unit 180 may perform a control operation for temporarily stopping the execution or reproduction of a file which is being executed or reproduced. Some functions may alternatively be maintained. For example, when a user function is execution playback of an audio signal, the control unit 180 may maintain a present state of the user function.

As a result, the control unit 180 allows the electronic device 200 to quickly recognize the intention of the user, and rapidly changes the state of the electronic device 200 in response to the quick recognition. Accordingly, it is possible to improve the efficiency of power consumption.

Meanwhile, if, in step 630, it is determined that the electronic device 200 is not in the active mode state, the control unit 180 may determine that the electronic device 200 is in a sleep mode state. The control unit 180 may then, through the proximity sensor, determine whether an interrupt is generated in step 660. Through this operation, the control unit 180 may detect an action of opening the front cover 220, causing it to be spaced apart from the touch panel 310.

Specifically, the action of opening the front cover 220 may be detected by sensing the generation of an interrupt through the proximity sensor. In the present example, because the touch panel 310 may be exposed by the action of causing the front cover 220 to be spaced away from the touch panel 310, the control unit 180 may determine the generation of the interrupt as a state of exposing the touch panel 310.

If, in step 660, the generation of the interrupt has is detected through the proximity sensor, the control unit 180 may detect the particular pattern 240 of the front cover 220 in step 670. Through sensing the particular pattern 240, the control unit 180 may identify a state of the front cover 220. The front cover 220 may either be closed and covering the touch panel 310, or open and exposing the touch panel 310 thereof.

To this end, the control unit 180 may sense the particular pattern 240 installed in the front cover 220, by using the EMR sheet 330 mounted within the electronic device 200.

Specifically, the particular pattern 240 contacts or approaches the touch panel 310 when the front cover 220 is closed and covering the touch panel 310 (as illustrated in FIG. 4), resonance is generated in the PCB of the EMR sheet 330 through which a current flows. At this time, the generation of resonance blocks the current which flows through the PCB. Whether the particular pattern 240 contacts or approaches the touch panel 310 may thus be detected by measuring an induced current generated in the PCB due to the resonance. Next, the control unit 180 performs scanning at each position of the EMR sheet 330, and thereby may determine whether the particular pattern 240 contacts the touch panel 310 and the position of the particular pattern 240, based on a difference in strength between input signals.

In contrast, the front cover 220 is opened so as to expose the touch panel 310 (as illustrated in FIG. 5), because the particular pattern 240 does not contact or approach the touch panel 310, but is more spaced distant from the touch panel 310, an induced current is not generated in the EMR sheet 330. Accordingly, the control unit 180 may detect a state in which the front cover 220 is spaced apart from the touch panel 310 by a predetermined distance or longer. As a result, the control unit 180 may determine a present state as a state in which the front cover 220 is open and not covering the touch panel 310, but is opened and exposing the touch panel 310.

When the particular pattern 240 of the front cover 220 is not detected in step 670, the control unit 180 changes a mode state of the electronic device 200 to an active mode, in step 690. Specifically, the control unit 180 may consider that the particular pattern 240 is not sensed due to the state in which the front cover 220 is opened so as to expose the touch panel 310. Accordingly, the control unit 180 may consider the state of exposing the touch panel 310 as the user's intention of using the electronic device 200, and may change the electronic device 200 to the active mode.

As a result, the control unit 180 allows the electronic device 200 to quickly recognize the intention of the user, and rapidly changes the state of the electronic device 200 in response to the quick recognition. Accordingly, an embodiment of the present disclosure enables the user to quickly and conveniently use the electronic device 200, from the point of view of the user.

Meanwhile, when determining in step 660 that the generation of the interrupt has not been sensed through the proximity sensor, the control unit 180 maintains the sleep mode state of the electronic device 200 in step 680. Specifically, the control unit may determine that the interrupt is not generated due to the front cover 220 being closed and thus not spaced apart from the touch panel 310, but rather covering the touch panel 310. Accordingly, the control unit 180 may maintain the electronic device 200 in the sleep mode state.

Meanwhile, although the control unit 180 has sensed the generation of the interrupt through the proximity sensor in step 660, when the control unit 180 senses the particular pattern 240 of the front cover 220 in step 670, the control unit 180 determines the front cover 220 is closed and covering the touch panel 310 of the electronic device 200, and maintains the electronic device 200 in the sleep mode, in step 680.

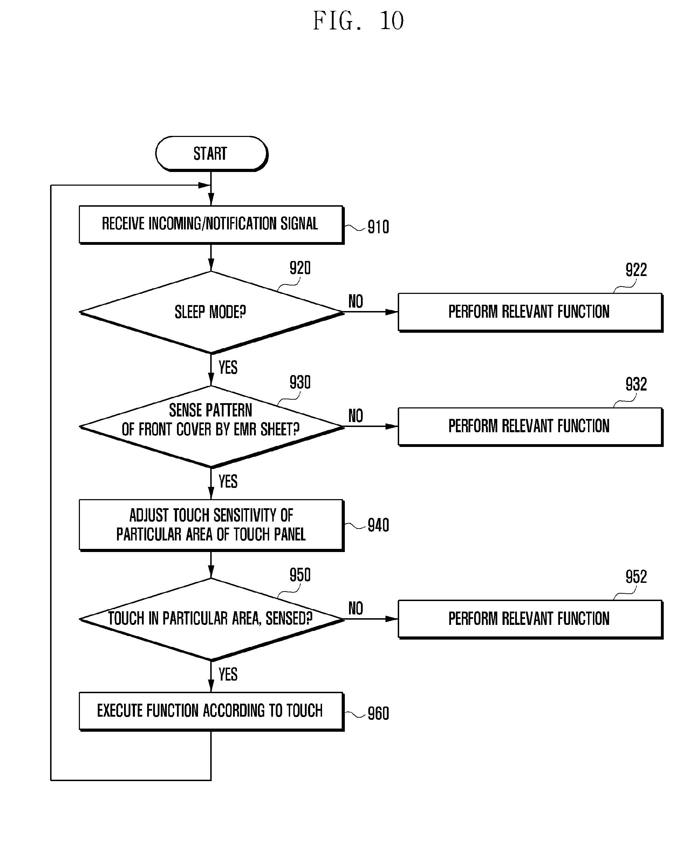

FIG. 10 is a flowchart illustrating an example method for executing a function in an electronic device having a front cover according to an embodiment of the present disclosure.

First, the control unit 180 receives an incoming signal or a notification signal in step 910. Examples of the incoming signal or the notification signal may include a call request signal from a caller, a text transmission notification signal, a notification signal according to the execution of a particular App, and the like, which are received as external transmissions, but it is understood the disclosure is not limited to the recited embodiments here.

In step 920, the control unit 180 determines whether the electronic device 200 is in a sleep mode state. If the electronic device 200 is not in a sleep mode state, the control unit 180 may perform a relevant function 922.

If the electronic device 200 is in a sleep mode state, the control unit 180 senses the particular pattern 240 of the front cover 220 through the EMR sheet 330, in step 930. The method for detecting the front cover 220 by using the EMR sheet 330 has been described with reference to FIGS. 1 to 9, and thus a detailed description thereof will be omitted.

If the particular pattern 240 of the front cover 220 is sensed through the EMR sheet 330 in step 930, the control unit 180 adjusts a touch sensitivity of the particular area 210 of the touch panel 310, in step 940. For example, the control unit 180 enables a part of the touch panel 310 matched to the particular area 210 to have a higher touch sensitivity than that of a remaining part of the touch panel 310 except for the particular area 210.

In the present example, the front cover 220 includes the transparent area 260 at a part thereof. As described above, the transparent area 260 is made of a transparent material, through which a screen displayed in the particular area 210 of the touch panel 310 can be seen when the front cover 220 is closed and covering the touch panel 310. Also, the transparent area 260 may be formed by a material capable of delivering a touch event, which has been generated by the user's hand, an electronic pen or the like, to the touch panel 310. Particularly, the transparent area 260 may deliver hovering by the user's hand, an electronic pen or the like to the touch panel 310.

The particular area 210 may be a partial area of the touch panel 310, which faces the transparent area 260 of the front cover 220. In other words, the particular area 210 is exposed to the user through the transparent area 260 of the front cover 220 so as to identify or control the execution of a main function of the electronic device 200 even in the state where the front cover 220 covers the touch panel 310.

Meanwhile, when the particular pattern 240 of the front cover 220 has not been sensed through the EMR sheet 330 in step 930, the control unit 180 determines the front cover 220 is not covering the touch panel 310, but rather, is opened and exposing the touch panel 310, and performs a relevant function, in step 932. The relevant function may be, for example, an application function which is matched to an icon selected by sensing a touch event or hovering which has been input to the touch panel.

In step 950, the control unit 180 senses a touch event or hovering generated in the particular area 210. The touch event may be generated when the user's finger, an electronic pen or the like contacts the particular area 210. The hovering may be generated when the user's finger or a touch input tool approaches the particular area 210 within a predetermined spacing distance which is previously set. Specifically, the touch event and hovering may be delivered through the transparent area 260 of the front cover 220, and may be sensed by the touch panel 310. Alternatively, the touch event and hovering may be delivered through the transparent area 260, and may be sensed by the touch panel 310.

When the touch event or hovering has been detected in the particular area 210 in step 950, the control unit 180 executes a function according to the detected touch event or hovering, in step 960. In one embodiment, the control unit 180 may execute an application function corresponding to an icon selected by the detected touch event or hovering. For example, when the selected icon is a call execution icon, a call function may be executed by the user's selection. Alternatively, when the selected icon is a text message display icon, a text message indicated by the user's selection may be displayed. Alternatively, when the selected icon is an alarm termination icon, an alarm sound or display may be terminated.

If the generation of the touch event or hovering has not been detected in the particular area 210 in step 950, then in step 952, the control unit 180 may notify the user that the user is to input an optional command matched to the reception of the incoming signal/notification signal within a predetermined time period, by using the display of text, vibration or a notification sound, or automatically performs a preset function when the predetermined time period elapses.

The above-described electronic device 200 may further include various additional modules according to embodiments of the present disclosure. Specifically, the electronic device 200 may further include elements, which have not been described above, such as a short-range communication module for short-range communication, an interface for transmitting and receiving data according to a wired communication scheme or a wireless communication scheme of the electronic device 200, an Internet communication module for communicating with an Internet network and performing an Internet function, a digital broadcast module for receiving and reproducing a digital broadcast signal, and the like. These elements may be variously modified according to the convergence trend of digital devices, and cannot be all enumerated. However, the electronic device 200 may further include elements equivalent to the above-described elements. Also, it goes without saying that, in the electronic device 200, a particular configuration may be excluded from the above-described configuration or may be replaced by another configuration according to embodiments of the present disclosure. This can be easily understood by those having ordinary knowledge in the technical field of the present disclosure.

The above-described method for controlling a state change and executing a function in the electronic device, according to an embodiment of the present disclosure, may be implemented in the form of program instructions executable through various computer means, and may be recorded in a computer-readable recording medium. In this case, the computer-readable recording medium may include a program instruction, a data file, a data structure, and the like, individually or in a combination thereof. Meanwhile, the program instructions recorded in the recording medium may be specially designed and configured for the present disclosure, or may be known to and usable by those skilled in the field of computer software.

Examples of the computer-readable recording medium may include magnetic media such as a hard disk, a floppy disk, and a magnetic tape, optical media such as a Compact Disc Read Only Memory (CD-ROM) and a Digital Versatile Disc (DVD), magneto-optical media such as a floptical disk, and hardware devices, such as a ROM, a RAM, a flash memory and the like, which are specially configured to store and execute program instructions.

In the above description, examples of the program instructions may include a machine language code created by a compiler and a high-level language code executable by a computer by using an interpreter or the like. Also, the above-described hardware device may be configured to operate as one or more software modules in order to perform an operation of the present disclosure.

According to embodiments of the present disclosure, whether the front cover contacts or approaches the touch panel is detected by sensing the particular pattern mounted to the front cover by using the EMR sheet, and thereby a state of the electronic device may be rapidly changed or may be maintained.

Also, according to embodiments of the present disclosure, when an incoming signal or a notification signal is generated in a state where the front cover mounted on the electronic device covers the touch panel, the user can input a command through the transparent area formed in the front cover even without opening the front cover, and thereby can perform a corresponding function.

While the disclosure has been shown and described with reference to certain embodiments thereof, it will be understood by those skilled in the art that various changes in form and details may be made therein without departing from the ambit of the disclosure as defined by the appended claims and equivalents thereof.

## Claims

1. A method of controlling a state of an electronic device, comprising:
detecting whether a front cover is coupled to the electronic device;
in response to detecting the front cover is coupled, detecting:
an electronic device state, including at least a sleep mode and an active mode, and
a front cover state, including at least a closed state where the front cover covers a touch panel of the electronic device, and an open state where the front cover exposes the touch panel;
maintaining the electronic device state according to a first combination of the electronic device state and the front cover state; and
altering the electronic device state according to a second combination of the electronic device state and the front cover state.

2. The method of claim 1, further comprising:
detecting whether the front cover is coupled by detecting a recognition pin that is mounted on a cover surface coupled to the front cover, the recognition pin contacting a physical pin mounted on the electronic device to indicate the mounting of the front cover and cover surface on the electronic device.

3. The method of claim 1, wherein detecting the front cover state further comprises:
detecting a current generated by an electromagnetic interaction between an electrically conductive particular pattern coupled to the front cover, and an electromagnetic resonance sheet mounted within the electronic device.

4. The method of claim 3, further comprising:
detecting an induced current generated by resonance induced by proximity of the particular pattern to the electromagnetic resonsance sheet, the proximity causing blocking of an electric current in the electromagnetic resonance sheet.

5. The method of claim 1, further comprising: in response to detecting that the front cover state is the open state and the electronic device state is the sleep mode, terminating the sleep mode and executing the active mode, and
in response to detecting that the front cover state is the closed state and the electronic device state is the sleep mode, maintaining execution of the sleep mode.

6. The method of claim 1, further comprising: in response to detecting that the front cover state is the open state and the electronic device is the active mode, maintaining execution of the active mode, and
in response to detecting that the front cover state is the closed state and the electronic device is the active mode, terminating the active mode and executing the sleep mode.

7. An electronic device, comprising:
a touch panel;
a front cover configured to cover the touch panel in a closed state, and expose the touch panel in an open state; and
a control unit configured to:
detect an electronic device state, including at least a sleep mode and an active mode, and a front cover state, including at least the closed state and the open state,
maintain the electronic device state according to a first combination of the electronic device state and the front cover state; and
alter the electronic device state according to a second combination of the electronic device state and the front cover state.

8. The electronic device of claim 7, further comprising:
a recognition pin formed in a surface coupled to the front cover.

9. The electronic device of claim 8, further comprising at least one of :
a physical pin mounted on the electronic device, configured to contact the recognition pin, the contact detectable by a main circuit board of the electronic device to detect the front cover is coupled to the electronic device,
a electromagnetically sensitive particular pattern module mounted on the front cover, or
a electromagnetic resonance sheet mounted in the electronic device and configured to electromagnetically interact with the particular pattern module when the front cover is at least in the closed state.

10. The electronic device of claim 9, the controller further configured to:
detect an induced current geenrated by resonance induced by proximity of the particular pattern module to the electromagnetic resonsance sheet, the proximity causing blocking of an electric current in the electromagnetic resonance sheet.

11. The electronic device of claim 7, further comprising:
a proximity sensor, mounted in the electronic device, configured to detect opening or closing of the front cover.

12. The electronic device of claim 7, further comprising:
a transparent area in the front cover, configured to expose a particular area of the touch panel when the front cover is in the closed state, and covering the touch panel.

13. The electronic device of claim 12, the control unit further configured to:
in response to detecting the front cover state is the closed state and the electronic device state is the sleep mode,
adjusting a touch sensitivity of the touch panel for the particular area, and detecting a touch input event generated by a a touch event on the touch panel, or a hovering event proximate to the touch panel within the particular area.

14. The electronic device of claim 7, the control unit further configured to: in response to detecting that the front cover state is the open state and the electronic device state is the sleep mode, terminate the sleep mode and executing the active mode, and
in response to detecting that the front cover state is the closed state and the electronic device state is the sleep mode, maintain execution of the sleep mode.

15. The electronic device of claim 7, the control unit further configured to:
in response to detecting that the front cover state is the open state and the electronic device is the active mode, maintaining execution of the active mode; and
in response to detecting that the front cover state is the closed state and the electronic device is the active mode, terminating the active mode and executing the sleep mode.
